# EUROPEAN PATENT SPECIFICATION

(11) **EP 3 992 033 B1**
(45) Date of publication and mention of the grant of the patent: **10.12.2025**
(21) Application number: 20831981.4
(22) Date of filing: 25.06.2020
(51) Int. Cl.: B60R 1/06, B60R 1/12

(54) **VEHICLE MIRROR DEVICE AND METHOD FOR MANUFACTURING VEHICLE MIRROR DEVICE**
FAHRZEUGSPIEGELVORRICHTUNG UND VERFAHREN ZUR HERSTELLUNG EINER FAHRZEUGSPIEGELVORRICHTUNG
DISPOSITIF DE RÉTROVISEUR DE VÉHICULE ET PROCÉDÉ DE FABRICATION D'UN DISPOSITIF DE RÉTROVISEUR DE VÉHICULE

(30) Priority: 28.06.2019 JP 2019121974
(43) Date of publication of application: 04.05.2022
(73) Proprietor: Misato Industries Co., Ltd., Fujioka-shi, Gunma-ken 375-0024 (JP)
(72) Inventor: KAWANISHI Joichi, Isehara-shi, Kanagawa 259-1192 (JP); NAKATANI Takashi, Isehara-shi, Kanagawa 259-1192 (JP); YUYAMA Takuro, Isehara-shi, Kanagawa 259-1192 (JP); IBA Ryosuke, Isehara-shi, Kanagawa 259-1192 (JP); MATSUBARA Tomoya, Isehara-shi, Kanagawa 259-1192 (JP); WATANABE Yuto, Isehara-shi, Kanagawa 259-1192 (JP)
(74) Representative: Reddie & Grose LLP
(86) International application number: PCT/JP2020/025069
(87) International publication number: WO 2020/262547

(56) References cited:
- DE-A1- 102015 220 445
- JP-A- 2006 049 218
- JP-A- 2013 001 179
- JP-A- 2016 078 559
- JP-A- 2017 052 357

## Description

### TECHNICAL FIELD

The present invention relates to a vehicular mirror apparatus and a method for manufacturing a vehicular mirror apparatus.

### BACKGROUND ART

In an exemplary known configuration of a vehicular mirror apparatus, an image pickup device that acquires image light and a floodlight device that emits infrared light are arranged in a housing holding a mirror (see JP 2016-078559 A1, for instance).

In the configuration described in JP 2016-078559 A, the image pickup device and the floodlight device are secured to an under panel with a co-fastening screw and individual securing screws, and the under panel is secured to the housing with a screw other than the above screws. In such configuration, screws need to be fixed in at least four spots, so that a fastening work takes time and effort.

Additionally, JP2017-052357 discloses a vehicular lighting equipment, in which a mounting member holds a storage body accommodating an optical member of a projection unit (lamp unit 46) for projecting a projection image. The mounting member is arranged on the outside of a vehicle in a state in which a vehicle body side is rotatably supported, and mounted on a rotator (door mirror) provided with visual identification means for assisting a vehicle occupant's visual identification. Thus, the projection unit is mounted on the rotator. JP2006-049218 and JP2013-001179 disclose an outside mirror device and a retractable mirror respectively,

The present invention has been made in view of the above problems. We have appreciated that it would be desirable to provide a vehicular mirror apparatus allowing the fastening work to take reduced time and effort and a method for manufacturing such vehicular mirror apparatus.

### SUMMARY OF THE INVENTION

A vehicular mirror apparatus according to the present invention includes a housing mounted on a lateral portion of a vehicle and holding a mirror, and an attachment member, on which an internal unit including one or more of an image pickup device that acquires image light, a floodlight device that emits infrared light, and an illumination device that emits visible light is fitted, and which is attached to a lower portion of the housing so as to put the internal unit between the attachment member and the housing, the attachment member being fastened to a first portion of the internal unit with a unit fastening member, and fastened to the housing and a second portion of the internal unit with a housing fastening member.

The unit fastening member and the housing fastening member each include a fastening screw. The attachment member includes a first screw receiver that receives the fastening screw of the unit fastening member, and a second screw receiver that receives the fastening screw of the housing fastening member. The second receiver has a cylindrical outer peripheral face that effects positioning with respect to the second portion of the internal unit, and the second portion includes a locking part that restrains the internal unit from rotational transfer centering on the unit fastening member, when the locking part is locked to the second receiver..

The internal unit may include two out of the image pickup device, the floodlight device, and the illumination device, and the attachment member may be fastened to the first portion of a first internal unit as one internal unit and the first portion of a second internal unit as another internal unit with the unit fastening member, fastened to the housing and the second portion of the first internal unit with a first housing fastening member that is the housing fastening member, and fastened to the housing and the second portion of the second internal unit with a second housing fastening member that is the housing fastening member and is different from the first housing fastening member.

The internal unit may include the image pickup device and the floodlight device.

A method for manufacturing a vehicular mirror apparatus according to the present invention may include fastening a first portion of an internal unit including one or more out of an image pickup device that acquires image light, a floodlight device that emits infrared light, and an illumination device that emits visible light to an attachment member with a unit fastening member being joined to a first screw receiver, putting the internal unit between a housing mounted on a lateral portion of a vehicle and which holds a mirror and the attachment member, to which the internal unit is fastened, so as to support the internal unit, and fastening the housing to the attachment member and a second portion of the internal unit with a housing fastening member being joined to a second screw receiver, wherein the unit fastening member and the housing fastening member each include a fastening screw, the first screw receiver receiving the fastening screw of the unit fastening member, and the second screw receiver receiving the fastening screw of the housing fastening member, the second screw receiver has a cylindrical outer peripheral face that effects positioning with respect to the second portion of the internal unit, the second portion includes a locking part that restrains the internal unit from rotational transfer centering on the unit fastening member, when the locking part is locked to the second receiver, and the fastening with the housing fastening member includes locking the locking part to the second receiver with the locking part.

### EFFECT OF THE INVENTION

According to the present invention, the fastening work is allowed to take reduced time and effort.

### BRIEF DESCRIPTION OF THE DRAWINGS

FIG. 1 is a plan view illustrating an example of a vehicle provided with a vehicular mirror apparatus according to the present embodiment.
FIG. 2 is a front view of the vehicular mirror apparatus according to the present embodiment.
FIG. 3 is a diagram illustrating the vehicular mirror apparatus according to the present embodiment as viewed from below.
FIG. 4 is a diagram illustrating an example of an attachment member.
FIG. 5 is a diagram illustrating an example of the attachment member.
FIG. 6 is a diagram illustrating an example of the attachment member.
FIG. 7 is a diagram illustrating a configuration along a B-B cross section in FIG. 6.
FIG. 8 is a diagram illustrating a state where the attachment member is secured to a housing.
FIG. 9 is a diagram schematically illustrating a positional relationship between the housing and the attachment member.
FIG. 10 is a diagram illustrating a configuration along a C-C cross section in FIG. 8.
FIG. 11 is a diagram illustrating a configuration along a D-D cross section in FIG. 8.
FIG. 12 is a flowchart illustrating an example of a method for manufacturing a vehicular mirror apparatus.

### EXAMPLE EMBODIMENTS

In the following, an embodiment of the present invention is described based on the drawings. The embodiment in no way limits the present invention. Components in the embodiment described below include those which are replaceable and easy to replace to a man of ordinary skill in the art or which are essentially the same.

In the description below, the front and back direction, the up and down direction, and the right and left direction are each a direction in an on-board state where a vehicular mirror apparatus is installed in a vehicle, that is to say, a direction for a driver who takes a driver's seat and looks in the direction of travel of the vehicle. In the present embodiment, the up and down direction is assumed to be parallel to the vertical direction and the right and left direction is assumed as a horizontal direction. With respect to the drawings, viewing from above is called plane viewing and a diagram of plane viewing is assumed as a plan view, and viewing from behind is called front viewing and a diagram of front viewing is assumed as a front view.

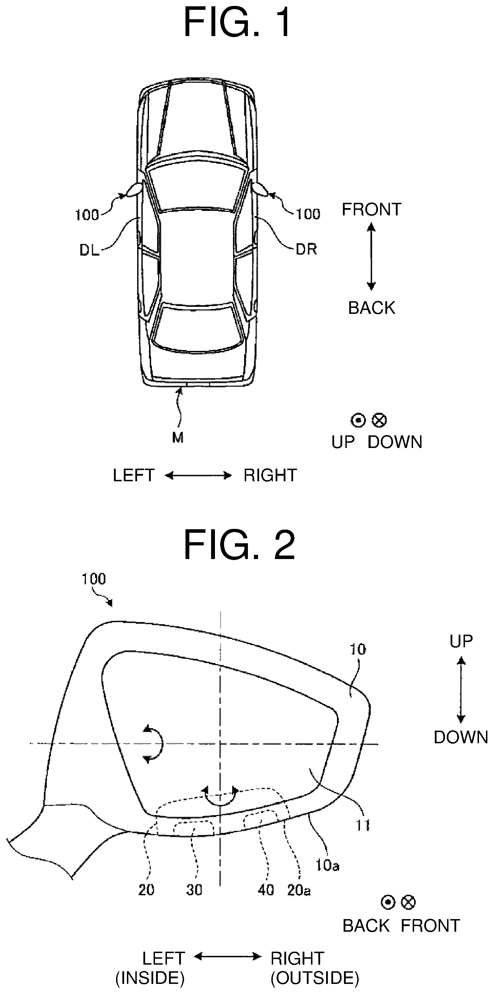

FIG. 1 is a plan view illustrating an example of a vehicle M provided with a vehicular mirror apparatus 100 according to the present embodiment. As illustrated in FIG. 1, the vehicular mirror apparatus 100 is a so-called door mirror and is mounted on left and right doors DL and DR of the vehicle M on the outside of the vehicle M. The vehicular mirror apparatuses 100 on the right and left are nearly symmetrical in the right and left direction.

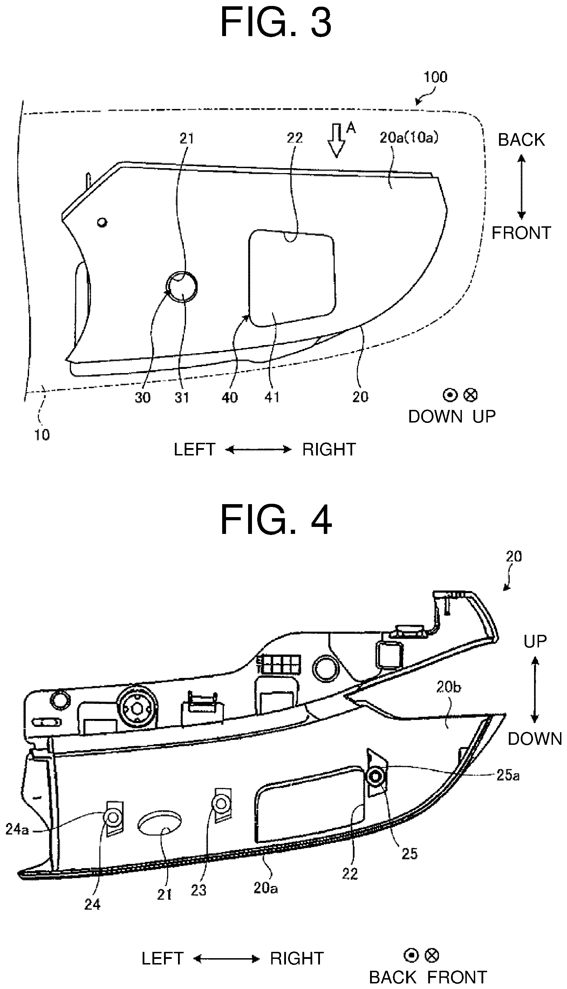

FIG. 2 is a front view of the vehicular mirror apparatus 100 according to the present embodiment. FIG. 3 is a diagram illustrating the vehicular mirror apparatus 100 according to the present embodiment as viewed from below. FIGS. 2 and 3 illustrate the vehicular mirror apparatus 100, which is formed as a door mirror. In FIGS. 2 and 3, a right door mirror of the vehicle M in FIG. 1 is illustrated.

The vehicular mirror apparatus 100 includes a housing 10, an attachment member 20, an image pickup device 30, and a floodlight device 40. The housing 10 is formed as a box-shaped body that opens on the front side. The housing 10 is so provided as to be rotatable by a rotary drive source not illustrated about a perpendicular axis extending in the vertical direction (vertical axis).

The housing 10 holds a mirror 11. The mirror 11 is formed in a plate shape using glass, a resin or the like. The mirror 11 is supported on the housing 10 through a mirror driving part not illustrated. The mirror driving part includes a drive source and a transmission mechanism not illustrated, and changes the position of the mirror 11 by transmitting a driving force of the drive source to the mirror 11 through the transmission mechanism. The mirror 11 is so provided as to be rotatable about the vertical axis and a perpendicular axis extending in the horizontal direction (horizontal axis), for instance. In this regard, the horizontal axis can be assumed as an axis along the right and left direction. The housing 10 is mounted on the left and right doors DL and DR of the vehicle M.

The attachment member 20 is attachable to and detachable from a lower portion of the housing 10 from behind. To the attachment member 20, the image pickup device 30 and the floodlight device 40 are secured with a fastening member such as a screw. The attachment member 20 is attached to the housing 10 in a state of having the image pickup device 30 and the floodlight device 40 secured thereto.

The attachment member 20 has a lower face 20a. The lower face 20a of the attachment member 20 is so formed as to curve from a vehicular inside toward a vehicular outside and upward. The lower face 20a of the attachment member 20 is located at the surface, where a lower face 10a of the housing 10 is located. In the present embodiment, the lower face 20a of the attachment member 20 constitutes part of the lower face 10a of the housing 10. The following description is made on the assumption that the lower face 20a of the attachment member 20 is a portion of the lower face 10a of the housing 10. In the present embodiment, the lower face 10a of the housing 10 including the lower face 20a of the attachment member 20 is so formed as to curve from the vehicular inside toward the vehicular outside and upward. The attachment member 20 has an opening 21 for exposing image light acquiring part 31 of the image pickup device 30 to be described later and an opening 22 for exposing infrared light emitting part 41 of the floodlight device 40 to be described later.

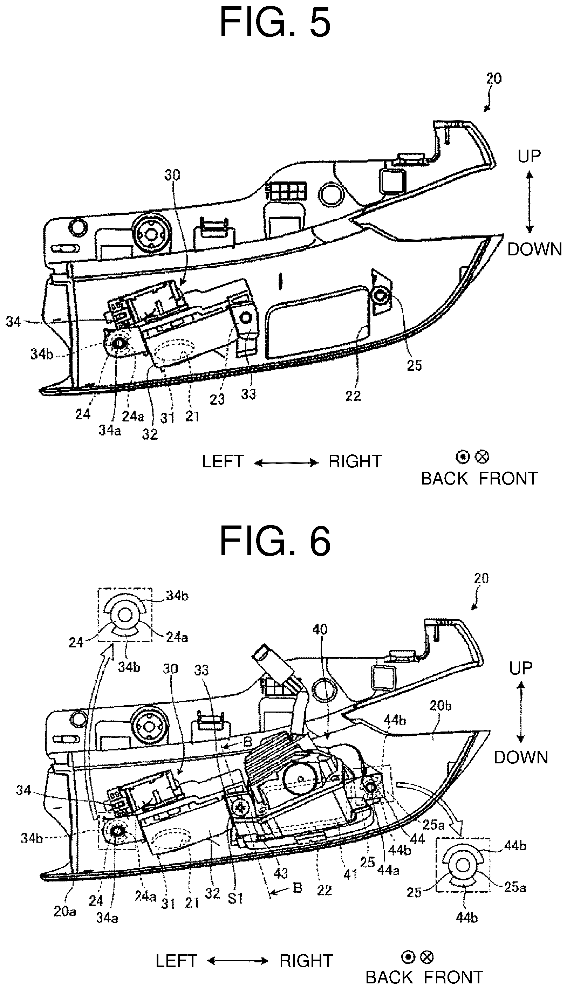

FIGS. 4 through 6 are diagrams illustrating an example of the attachment member 20. FIG. 4 illustrates the state, where the image pickup device 30 and the floodlight device 40 are removed, and the configuration as viewed from a direction represented by an arrow A in FIG. 3. FIG. 5 illustrates the state, where the image pickup device 30 is only attached to the attachment member 20. FIG. 6 illustrates the state, where the image pickup device 30 and the floodlight device 40 are attached to the attachment member 20.

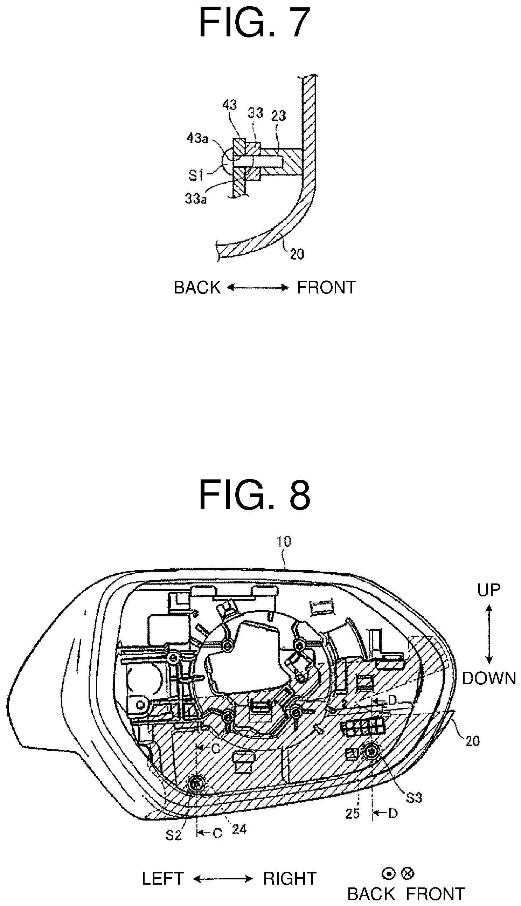

As illustrated in FIGS. 4 through 6, the attachment member 20 has screw receivers 23, 24, and 25 on an inner face 20b. The screw receivers 23, 24, and 25 are each provided in the form of a cylinder protruding backward from the inner face 20b (see FIGS. 7, 10, and 11). The screw receivers 23, 24, and 25 are so arranged as to align in the right and left direction, for instance. The screw receivers 23, 24, and 25 each have a hole opened forward. Inner faces of the holes of the screw receivers 23, 24, and 25 are threaded. To the screw receiver 23, a unit fastening screw (unit fastening member) S1 is joined by screwing. To the screw receiver 24, a first housing fastening screw (first housing fastening member) S2 is joined by screwing. To the screw receiver 25, a second housing fastening screw (second housing fastening member) S3 is joined by screwing. The unit fastening screw S1, the first housing fastening screw S2, and the second housing fastening screw S3 each have a head part and a screw part with a thread.

The screw receiver 24 has a cylindrical outer peripheral face 24a. The outer peripheral face 24a defines the position of a second portion 34 of the image pickup device 30 to be described later. Therefore, the outer peripheral face 24a of the screw receiver 24 has a function of a positioning part that effects positioning with respect to the second portion 34 of the image pickup device 30. Similarly, the screw receiver 25 has a cylindrical outer peripheral face 25a. The outer peripheral face 25a defines the position of a second portion 45 of the floodlight device 40 to be described later. Therefore, the outer peripheral face 25a of the screw receiver 25 has a function of a positioning part that effects positioning with respect to the second portion 45 of the floodlight device 40.

The image pickup device 30 is attached to the housing 10 through the attachment member 20. The image pickup device 30 is arranged on the vehicular inside with respect to the floodlight device 40. An infrared camera, for instance, is used for the image pickup device 30. The image pickup device 30 acquires an image of the surroundings of the vehicle. The image pickup device 30 includes the image light acquiring part 31 for acquiring image light PR, a frame 32 supporting the image light acquiring part 31, as well as a first portion 33 and the second portion 34 both arranged on the frame 32.

An optical member such as a lens is arranged on the image light acquiring part 31. The image light acquiring part 31 is arranged in a state of being exposed from the opening 21 in the lower face 20a of the attachment member 20 (the lower face 10a of the housing 10).

The frame 32 extends in the right and left direction in the on-board state. The frame 32 is provided with the first portion 33 and the second portion 34. The first portion 33 is arranged in an end portion of the frame 32 on the vehicular inside in the on-board state. The first portion 33 extends from the frame 32 toward the vehicular inside.

FIG. 7 is a diagram illustrating a configuration along a B-B cross section in FIG. 6. As illustrated in FIGS. 5 through 7, the first portion 33 has a through hole 33a, through which the screw part of the unit fastening screw S1 is caused to pass. The through hole 33a has a diameter larger than the diameter of the screw part but smaller than the diameter of the head part of the unit fastening screw S1.

The second portion 34 is arranged in an end portion of the frame 32 on the vehicular outside in the on-board state. The second portion 34 extends from the frame 32 toward the vehicular inside. The second portion 34 has a through hole 34a, through which the screw part of the first housing fastening screw S2 is caused to pass, and a locking part 34b that is locked to the screw receiver 24. The through hole 34a has a diameter larger than the diameter of the screw part but smaller than the diameter of the head part of the first housing fastening screw S2.

The locking part 34b is locked to the screw receiver 24 so as to restrain the frame 32 from rotational transfer centering on the unit fastening screw S1. In FIG. 6, a configuration of the rear (on the front side in the on-board state) of the second portion 34 is extracted and illustrated. As illustrated in FIG. 6, the locking part 34b is so provided as to be locked to an upper portion and a lower portion of the screw receiver 24. The locking part 34b is not limited in configuration to the above. A portion of the locking part 34b that is locked to the lower portion of the screw receiver 24 may be omitted. By locking the locking part 34b to the screw receiver 24, the through hole 34a is so arranged as to overlap the hole of the screw receiver 24 as viewed from behind.

The floodlight device 40 is attached to the housing 10 through the attachment member 20. The floodlight device 40 is arranged on the vehicular outside with respect to the image pickup device 30. The floodlight device 40 includes infrared light emitting part 41 for emitting infrared light IR and a frame 42 supporting the infrared light emitting part 41.

The infrared light emitting part 41 is arranged in a state of being exposed from the opening 22 in the lower face 20a of the attachment member 20 (the lower face 10a of the housing 10). The infrared light emitting part 41 is so arranged as to align with the image light acquiring part 31 in the right and left direction.

The frame 42 extends in the right and left direction in the on-board state. The frame 42 has a first portion 43 and a second portion 44. The first portion 43 is arranged in an end portion of the frame 42 on the vehicular outside in the on-board state. The first portion 43 extends from the frame 42 toward the vehicular outside. The first portion 43 has a through hole 43a. The through hole 43a has a diameter larger than the diameter of the screw part but smaller than the diameter of the head part of the unit fastening screw S1.

The second portion 44 is arranged in an end portion of the frame 42 on the vehicular inside in the on-board state. The second portion 44 extends from the frame 42 toward the vehicular inside. The second portion 44 has a through hole 44a, through which the screw part of the second housing screw S3 is caused to pass, and a locking part 44b that is locked to the screw receiver 25. The through hole 44a has a diameter larger than the diameter of the screw part but smaller than the diameter of the head part of the second housing fastening screw S3.

The locking part 44b is locked to the screw receiver 25 so as to restrain the frame 42 from rotational transfer centering on the unit fastening screw S1. In FIG. 6, a configuration of the rear (on the front side in the on-board state) of the second portion 44 is extracted and illustrated. As illustrated in FIG. 6, the locking part 44b is so provided as to be locked to an upper portion and a lower portion of the screw receiver 25. The locking part 44b is not limited in configuration to the above. A portion of the locking part 44b that is locked to the lower portion of the screw receiver 25 may be omitted. By locking the locking part 44b to the screw receiver 25, the through hole 44a is so arranged as to overlap the hole of the screw receiver 25 as viewed from behind.

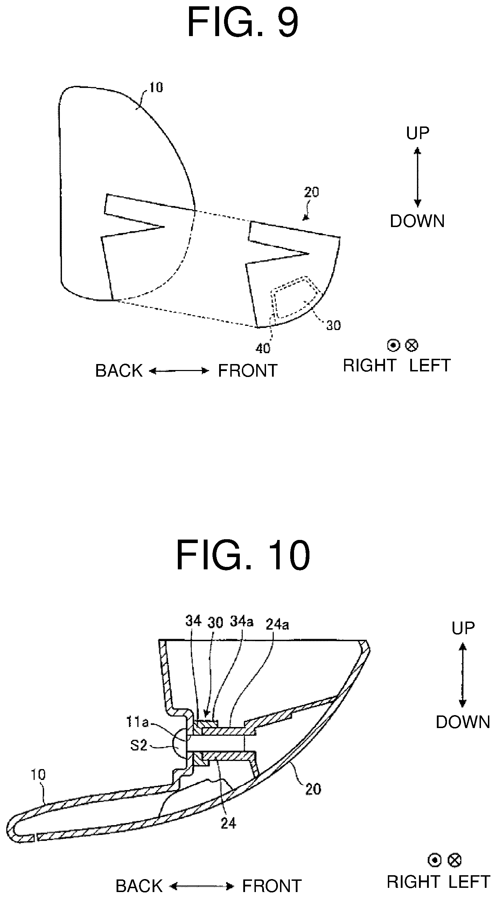

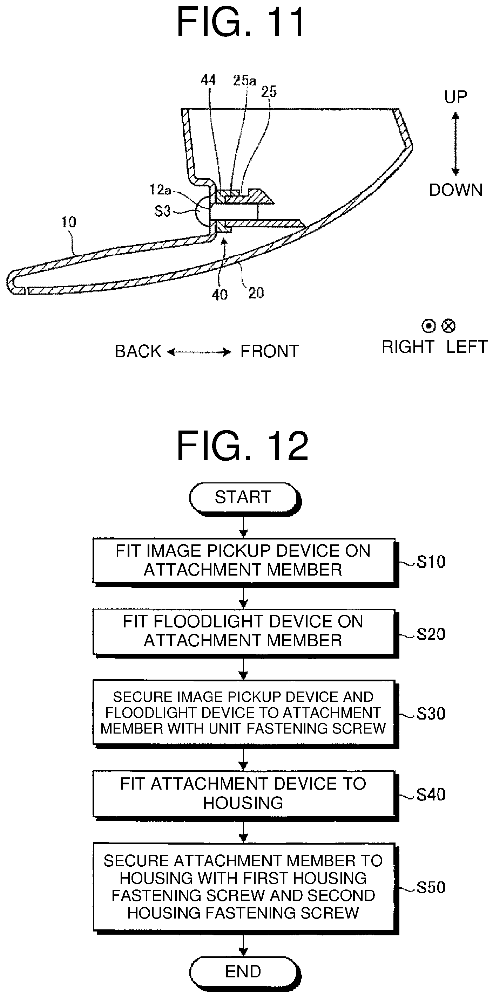

FIG. 8 is a diagram illustrating a state where the attachment member 20 is secured to the housing 10. FIG. 9 is a diagram schematically illustrating a positional relationship between the housing 10 and the attachment member 20. FIG. 10 is a diagram illustrating a configuration along a C-C cross section in FIG. 8. FIG. 11 is a diagram illustrating a configuration along a D-D cross section in FIG. 8.

As illustrated in FIGS. 8 and 9, the attachment member 20 is fitted onto the housing 10 from the front. The housing 10 has a through hole 11a and a through hole 12a (see FIGS. 10 and 11). The screw part of the first housing fastening screw S2 is caused to pass through the through hole 11a. The through hole 11a has a diameter larger than the diameter of the screw part but smaller than the diameter of the head part of the first housing fastening screw S2. The screw part of the second housing fastening screw S3 is caused to pass through the through hole 12a. The through hole 12a has a diameter larger than the diameter of the screw part but smaller than the head part of the second housing fastening screw S3.

The attachment member 20 is fitted on the housing 10 in a position where the through hole 34a overlaps the through hole 11a of the housing 10 and the through hole 44a overlaps the through hole 12a of the housing 10 as viewed from behind.

As illustrated in FIGS. 10 and 11, the attachment member 20 is fastened to the housing 10 with the first housing fastening screw S2 and the second housing fastening screw S3. As illustrated in FIG. 10, the image pickup device 30 is secured in the state, where the second portion 34 is held between the housing 10 on the back side and the attachment member 20 (the screw receiver 24) on the front side. In addition, as illustrated in FIG. 11, the floodlight device 40 is secured in the state, where the second portion 44 is held between the housing 10 on the back side and the attachment member 20 (the screw receiver 25) on the front side.

Next, a method for manufacturing the vehicular mirror apparatus 100 having the configuration as above is described. The following description is made on an example of the vehicular mirror apparatus 100 including the image pickup device 30 and the floodlight device 40. FIG. 12 is a flowchart illustrating an example of the method for manufacturing the vehicular mirror apparatus 100. Initially, the image pickup device 30 is fitted on the attachment member 20 (step S10). In step S10, the locking part 34b of the second portion 34 of the image pickup device 30 is locked to the screw receiver 24 and, as a result, the through hole 33a of the first portion 33 overlaps the hole of the screw receiver 23 and the through hole 34a of the second portion 34 overlaps the hole of the screw receiver 24 as viewed from behind.

Then, the floodlight device 40 is fitted on the attachment member 20 (step S20). In step S20, the locking part 44b of the second portion 44 of the floodlight device 40 is locked to the screw receiver 25 and, as a result, the through hole 43a of the first portion 43 overlaps the hole of the screw receiver 23 and the through hole 44a of the second portion 44 overlaps the hole of the screw receiver 25 as viewed from behind.

Next, the image pickup device 30 and the floodlight device 40 are secured to the attachment member with the unit fastening screw S1 (step S30). In step S30, the unit fastening screw S1 is tightened in the screw receiver 23 in the state, where the image pickup device 30 and the floodlight device 40 are positioned. Consequently, the first portion 33 of the image pickup device 30 and the first portion 43 of the floodlight device 40 are collectively fastened with the unit fastening screw S1. In such state, the second portion 34 of the image pickup device 30 is locked to the screw receiver 24 through the locking part 34b and the second portion 44 of the floodlight device 40 is locked to the screw receiver 24 through the locking part 44b. Thus, the image pickup device 30 and the floodlight device 40 are prevented from being out of place.

Next, the attachment member 20, to which the image pickup device 30 and the floodlight device 40 are attached, is fitted on the housing 10 (step S40). In step S40, the attachment member 20 is fitted in a specified position on the housing 10 from the front and, as a result, the through hole 33a of the second portion 34 of the image pickup device 30 overlaps the through hole 11a of the housing 10 as viewed from behind. The through hole 34a of the second portion 34 of the image pickup device 30 overlaps the through hole 11a of the housing 10.

Next, the first housing fastening screw S2 is tightened in the screw receiver 24 and the second housing fastening screw S3 is tightened in the screw receiver 25 so as to secure the attachment member 20 to the housing 10 (step S50). By step S50, the image pickup device 30 is secured in the state, where the second portion 34 is held between the housing 10 on the back side and the screw receiver 24 of the attachment member 20 on the front side. In addition, the floodlight device 40 is secured in the state, where the second portion 44 is held between the housing 10 on the back side and the screw receiver 25 of the attachment member 20 on the front side. By going through the steps as above, the vehicular mirror apparatus 100 is manufactured.

As described above, the vehicular mirror apparatus 100 according to the present embodiment includes the housing 10, which is mounted on a lateral portion of the vehicle and holds the mirror, and the attachment member 20, on which the image pickup device 30 that acquires image light and the floodlight device 40 that emits infrared light are fitted as internal units, and which is attached to the lower face 10a of the housing 10 so as to put the internal units between the attachment member 20 and the housing 10, fastened to the first portions 33 and 43 and the second portions 34 and 44 of the internal units with the unit fastening screw S1, and fastened to the housing 10 and the second portions 34 and 44 with the housing fastening screws S2 and S3.

A method for manufacturing the vehicular mirror apparatus according to the present embodiment may include fastening the first portions 33 and 43 of the image pickup device 30 that acquires image light and the floodlight device 40 that emits infrared light to the attachment member 20 with the unit fastening screw S1, putting the internal units between the housing 10, which is mounted on a lateral portion of the vehicle and holds the mirror, and the attachment member 20, to which the internal units are fastened, so as to support the internal units, and fastening the housing 10 to the attachment member 20 and the second portions of the internal units with fastening members for the housing 10.

Such configurations make it possible to secure the image pickup device 30 and the floodlight device 40 to the housing 10 by securing the image pickup device 30 and the floodlight device 40 to the attachment member 20 with the unit fastening screw S1, then securing the attachment member 20 to the housing 10 with the housing fastening screws S2 and S3. Consequently, the image pickup device 30 and the floodlight device 40 do not need to be directly secured to the housing 10. Therefore, the fastening work is allowed to take reduced time and effort.

In the vehicular mirror apparatus 100 according to the present embodiment, the attachment member 20 may include a positioning part that effects positioning with respect to the second portions 34 and 44 of the image pickup device 30 and the floodlight device 40. Such configuration makes it possible to attach the image pickup device 30 and the floodlight device 40 to the attachment member 20 in a state of being positioned with high accuracy.

In the vehicular mirror apparatus 100 according to the present embodiment, the internal units may include two out of the image pickup device 30, the floodlight device 40, and an illumination device and, in that case, the attachment member 20 may be fastened to the first portion 33 of the image pickup device 30 and the first portion 43 of the floodlight device 40 with the unit fastening screw S1, fastened to the housing 10 and the second portion 34 of the image pickup device 30 with the first housing fastening screw S2, and fastened to the housing 10 and the second portion 44 with the second housing fastening screw S3, which is different from the first housing fastening screw S2. The internal units may be the image pickup device 30 and the floodlight device 40. Such configuration allows the fastening work to take reduced time and effort when the image pickup device 30 and the floodlight device 40 as two internal units are to be fastened.

The technical scope of the present invention is not limited to the embodiment as above, and a modification can appropriately be made without departing from the scope of the appended claims. For instance, in the above embodiment, description is made for an exemplary case where the image pickup device 30 and the floodlight device 40 are used as two internal units, to which the present invention is not limited. A single internal unit or three or more internal units may be provided. An illumination device that emits visible light may be used as an internal unit.

In the above embodiment, description is made for an exemplary case where the locking part 34b is provided in the second portion 34 on the frame 32 and the locking part 44b is provided in the second portion 44 on the frame 42. A configuration similar to those of the locking parts 34b and 44b may be provided in at least one of the first portion 33 on the frame 32 and the first portion 43 on the frame 42.

### DESCRIPTION OF REFERENCE NUMERALS

M ... vehicle
S1 ... unit fastening screw
S2 ... first housing fastening screw
S3 ... second housing fastening screw
10 ... housing
10a, 20a ... lower face
11 ... mirror
11a, 12a, 33a, 34a, 43a, 44a ... through hole
20 ... attachment member
20b ... inner face
21, 22 ... opening
23, 24, 25 ... screw receiver
24a, 25a ... outer peripheral face
30 ... image pickup device
31 ... image light acquiring part
32, 42 ... frame
33, 43 ... first portion
34, 44, 45 ... second portion
34b, 44b ... locking part
40 ... floodlight device
41 ... infrared light emitting part
100 ... vehicular mirror apparatus

## Claims

1. A vehicular mirror apparatus (100) comprising:
a housing (10) mounted on a lateral portion of a vehicle and holding a mirror (11); and
an attachment member (20), on which an internal unit including one or more of an image pickup device (30) that acquires image light, a floodlight device (40) that emits infrared light, and an illumination device that emits visible light is fitted, and which is attached to a lower portion of the housing (10) so as to put the internal unit between the attachment member (20) and the housing (10),
wherein the attachment member (20) is fastened to a first portion (33; 43) of the internal unit with a unit fastening member (S1), and fastened to the housing (10) and a second portion (34; 44) of the internal unit with a housing fastening member (S2; S3),
**characterized in that** the unit fastening member (S1) and the housing fastening member (S2; S3) each include a fastening screws;
wherein the attachment member (20) includes a first screw receiver (23) that receives the fastening screw of the unit fastening member (S1), and a second screw receiver (24; 25) that receives the fastening screw of the housing fastening member (S2; S3), and
the second receiver (24) has a cylindrical outer peripheral face (24a; 25a) that effects positioning with respect to the second portion (34; 44) of the internal unit, and
the second portion (34; 44) includes a locking part (34b: 44b) that restrains the internal unit from rotational transfer centering on the unit fastening member (S1), when the locking part (34b: 44b) is locked to the second receiver (24; 25)

2. The vehicular mirror apparatus (100) according to claim 1,
wherein the internal unit includes two out of the image pickup device (30), the floodlight device (40), and the illumination device, and
wherein the attachment member (20) is:
fastened to the first portion (33) of a first internal unit as one internal unit and the first portion (43) of a second internal unit as another internal unit with the unit fastening member (S1);
fastened to the housing (10) and the second portion (34) of the first internal unit with a first housing fastening member (S2) that is the housing fastening member (S2; S3); and
fastened to the housing (10) and the second portion (44) of the second internal unit with a second housing fastening member (S3) that is the housing fastening member (S2; S3) and is different from the first housing fastening member (S2).

3. The vehicular mirror apparatus (100) according to claim 2,
wherein the internal unit includes the image pickup device (30) and the floodlight device (40).

4. A method for manufacturing a vehicular mirror apparatus (100), comprising:
fastening a first portion (33; 43) of an internal unit including one or more out of an image pickup device (30) that acquires image light, a floodlight device (40) that emits infrared light, and an illumination device that emits visible light, to an attachment member (20) with a unit fastening member (S1) being joined to a first screw receiver (23);
putting the internal unit between a housing (10) which is mounted on a lateral portion of a vehicle and which holds a mirror (11) and the attachment member (20), to which the internal unit is fastened, so as to support the internal unit; and
fastening the housing (10) to the attachment member (20) and a second portion (34; 44) of the internal unit with a housing fastening member (S2; S3) being joined to a second screw receiver (24; 25),
wherein the unit fastening member (S1) and the housing fastening member (S2; S3) each include a fastening screw, the first screw receiver (23) receiving the fastening screw of the unit fastening member (S1), and the second screw receiver (24; 25) receiving the fastening screw of the housing fastening member (S2; S3),
the second screw receiver (24) has a cylindrical outer peripheral face (24a; 25a) that effects positioning with respect to the second portion (34; 44) of the internal unit,
the second portion (34; 44) includes a locking part (34b: 44b) that restrains the internal unit from rotational transfer centering on the unit fastening member when the locking part (34b: 44b) is locked to the second receiver (24; 25), and
the fastening with the housing fastening member (S2; S3) includes locking the locking part (34b: 44b) to the second receiver (24; 25) with the locking part (34b: 44b).

## Patentansprüche

1. Fahrzeugspiegelvorrichtung (100), die Folgendes beinhaltet:
ein Gehäuse (10), das an einem seitlichen Teil eines Fahrzeugs montiert ist und einen Spiegel (11) hält; und
ein Anbringungselement (20), an dem eine Inneneinheit mit einem oder mehreren von einer Bildaufnahmevorrichtung (30), die Bildlicht erfasst, einer Flutlichtvorrichtung (40), die Infrarotlicht ausstrahlt, und einer Beleuchtungsvorrichtung, die sichtbares Licht ausstrahlt, angebaut ist und das an einem unteren Teil des Gehäuses (10) angebracht ist, um die Inneneinheit zwischen dem Anbringungselement (20) und dem Gehäuse (10) anzuordnen,
wobei das Anbringungselement (20) mit einem Einheitbefestigungselement (S1) an einem ersten Teil (33; 43) der Inneneinheit befestigt ist und mit einem Gehäusebefestigungselement (S2; S3) mit dem Gehäuse (10) und einem zweiten Teil (34; 44) der Inneneinheit befestigt ist,
**dadurch gekennzeichnet, dass**
das Einheitbefestigungselement (S1) und das Gehäusebefestigungselement (S2; S3) jeweils eine Befestigungsschraube aufweisen;
wobei das Anbringungselement (20) eine erste Schraubenaufnahme (23), die die Befestigungsschraube des Einheitbefestigungselements (S1) aufnimmt, und eine zweite Schraubenaufnahme (24; 25), die die Befestigungsschraube des Gehäusebefestigungselements (S2; S3) aufnimmt, aufweist, und
die zweite Aufnahme (24) eine zylindrische Außenumfangsfläche (24a; 25a) hat, die die Positionierung in Bezug auf den zweiten Teil (34; 44) der Inneneinheit beeinflusst, und
der zweite Teil (34; 44) einen Verriegelungsteil (34b; 44b) aufweist, der die Inneneinheit an auf das Einheitbefestigungselement (S1) zentrierter Drehverlagerung hindert, wenn der Verriegelungsteil (34b; 44b) an der zweiten Aufnahme (24; 25) verriegelt ist.

2. Fahrzeugspiegelvorrichtung (100) nach Anspruch 1,
wobei die Inneneinheit zwei von der Bildaufnahmevorrichtung (30), der Flutlichtvorrichtung (40) und der Beleuchtungsvorrichtung aufweist und
wobei das Anbringungselement (20):
mit dem Einheitbefestigungselement (S1) an dem ersten Teil (33) einer ersten Inneneinheit als einer Inneneinheit und dem ersten Teil (43) einer zweiten Inneneinheit als einer weiteren Inneneinheit befestigt ist;
mit einem ersten Gehäusebefestigungselement (S2), das das Gehäusebefestigungselement (S2; S3) ist, an dem Gehäuse (10) und dem zweiten Teil (34) der ersten Inneneinheit befestigt ist; und
mit einem zweiten Gehäusebefestigungselement (S3), das das Gehäusebefestigungselement (S2; S3) ist und von dem ersten Gehäusebefestigungselement (S2) verschieden ist, an dem Gehäuse (10) und dem zweiten Teil (44) der zweiten Inneneinheit befestigt ist.

3. Fahrzeugspiegelvorrichtung (100) nach Anspruch 2,
wobei die Inneneinheit die Bildaufnahmevorrichtung (30) und die Flutlichtvorrichtung (40) aufweist.

4. Verfahren zur Herstellung einer Fahrzeugspiegelvorrichtung (100), die Folgendes beinhaltet:
Befestigen eines ersten Teils (33; 43) einer Inneneinheit mit einem oder mehreren von einer Bildaufnahmevorrichtung (30), die Bildlicht erfasst, einer Flutlichtvorrichtung (40), die Infrarotlicht ausstrahlt, und einer Beleuchtungsvorrichtung, die sichtbares Licht ausstrahlt, mit einem Einheitbefestigungselement (S1), das an eine erste Schraubenaufnahme (23) angefügt wird, an einem Anbringungselement (20);
Anordnen der Inneneinheit zwischen einem Gehäuse (10), das an einem seitlichen Teil eines Fahrzeugs montiert ist und das einen Spiegel (11) hält, und dem Anbringungselement (20), an dem die Inneneinheit befestigt ist, um die Inneneinheit zu stützen; und
Befestigen des Gehäuses (10) mit einem Gehäusebefestigungselement (S2; S3), das an eine zweite Schraubenaufnahme (24; 25) angefügt wird, an dem Anbringungselement (20) und einem zweiten Teil (34; 44) der Inneneinheit;
wobei das Einheitbefestigungselement (S1) und das Gehäusebefestigungselement (S2; S3) jeweils eine Befestigungsschraube aufweisen, die erste Schraubenaufnahme (23) die Befestigungsschraube des Einheitbefestigungselements (S1) aufnimmt und die zweite Schraubenaufnahme (24; 25) die Befestigungsschraube des Gehäusebefestigungselements (S2; S3) aufnimmt,
die zweite Schraubenaufnahme (24) eine zylindrische Außenumfangsfläche (24a; 25a) hat, die die Positionierung in Bezug auf den zweiten Teil (34; 44) der Inneneinheit beeinflusst,
der zweite Teil (34; 44) einen Verriegelungsteil (34b; 44b) aufweist, der die Inneneinheit an auf das Einheitbefestigungselement (S1) zentrierter Drehverlagerung hindert, wenn der Verriegelungsteil (34b; 44b) an der zweiten Aufnahme (24; 25) verriegelt ist, und
das Befestigen mit dem Gehäusebefestigungselement (S2; S3) das Verriegeln des Verriegelungsteils (34b; 44b) an der zweiten Aufnahme (24; 25) mit dem Verriegelungsteil (34b; 44b) aufweist.

## Revendications

1. Appareil rétroviseur de véhicule (100) comprenant :
un boîtier (10) monté sur une partie latérale d'un véhicule et tenant un rétroviseur (11) ; et
un élément d'attache (20), sur lequel une unité interne comprenant un ou plusieurs d'entre un dispositif de capture d'image (30) qui acquiert une lumière d'image, un dispositif projecteur (40) qui émet une lumière infrarouge et un dispositif d'éclairage qui émet une lumière visible sont montés, et qui est attaché à une partie inférieure du boîtier (10) de manière à placer l'unité interne entre l'élément d'attache (20) et le boîtier (10),
dans lequel l'élément d'attache (20) est fixé à une première partie (33,43) de l'unité interne avec un élément de fixation de l'unité (S1), et fixé au boîtier (10) et à une deuxième partie (34, 44) de l'unité interne avec un élément de fixation du boîtier (S2 ; S3),
**caractérisé en ce que**
l'élément de fixation de l'unité (S1) et l'élément de fixation du boîtier (S2 ; S3) comprennent chacun une vis de fixation ;
dans lequel l'élément d'attache (20) comprend un premier récepteur de vis (23) qui reçoit la vis de fixation de l'élément de fixation de l'unité (S1), et un deuxième récepteur de vis (24 ; 25) qui reçoit la vis de fixation de l'élément de fixation du boîtier (S2 ; S3), et
le deuxième récepteur (24) a une face périphérique externe cylindrique (24a ; 25a) qui effectue un positionnement par rapport à la deuxième partie (34 ; 44) de l'unité interne, et
le deuxième récepteur (34 ; 44) comprend une pièce de verrouillage (34b ; 44b) qui retient l'unité interne d'un transfert rotationnel centré sur l'élément de fixation de l'unité (S1), lorsque la pièce de verrouillage (34b ; 44b) est verrouillée au deuxième récepteur (24 ; 25).

2. Appareil rétroviseur de véhicule (100) selon la revendication 1,
dans lequel l'unité interne comprend deux d'entre le dispositif de capture d'image (30), le dispositif projecteur (40) et le dispositif d'éclairage, et
dans lequel l'élément d'attache (20) est :
fixé à la première partie (33) d'une première unité interne comme une unité interne et à la première partie (43) d'une deuxième unité interne comme une autre unité interne avec l'élément de fixation de l'unité (S1) ;
fixé au boîtier (10) et à la deuxième partie (34) de la première unité interne avec un premier élément de fixation du boîtier (S2) qui est l'élément de fixation du boîtier (S2 ; S3) ; et
fixé au boîtier (10) et à la deuxième partie (44) de la deuxième unité interne avec un deuxième élément de fixation du boîtier (S3) qui est l'élément de fixation du boîtier (S2 ; S3) et qui est différent du premier élément de fixation du boîtier (S2).

3. Appareil rétroviseur de véhicule (100) selon la revendication 2,
dans lequel l'unité interne comprend le dispositif de capture d'image (30) et le dispositif projecteur (40).

4. Procédé de fabrication d'un appareil rétroviseur de véhicule (100) comprenant :
fixer une première partie (33 ; 43) d'une unité interne comprenant un ou plusieurs d'entre un dispositif de capture d'image (30) qui acquiert une lumière d'image, un dispositif projecteur (40) qui émet une lumière infrarouge et un dispositif d'éclairage qui émet une lumière visible, à un élément d'attache (20) avec un élément de fixation de l'unité (S1) étant joint à un premier récepteur de vis (23) ;
placer l'unité interne entre un boîtier (10) qui est monté sur une partie latérale d'un véhicule et qui tient un rétroviseur (11) et l'élément d'attache (20), auquel l'unité interne est fixée, de manière à soutenir l'unité interne ; et
fixer le boîtier (10) à l'élément d'attache (20) et à une deuxième partie (34 ; 44) de l'unité interne avec un élément de fixation du boîtier (S2 ; S3) étant joint à un deuxième récepteur de vis (24 ; 25),
dans lequel l'élément de fixation de l'unité (S1) et l'élément de fixation du boîtier (S2 ; S3) comprennent chacun une vis de fixation, le premier récepteur de vis (23) recevant la vis de fixation de l'élément de fixation de l'unité (S1) et le deuxième récepteur de vis (24 ; 25) recevant la vis de fixation de l'élément de fixation du boîtier (S2 ; S3),
le deuxième récepteur de vis (24) a une face périphérique externe cylindrique (24a ; 25a) qui effectue un positionnement par rapport à la deuxième partie (34 ; 44) de l'unité interne,
la deuxième partie (34 ; 44) comprend une pièce de verrouillage (34b ; 44b) qui retient l'unité interne d'un transfert rotationnel centré sur l'élément de fixation de l'unité, lorsque la pièce de verrouillage (34b ; 44b) est verrouillée au deuxième récepteur (24 ; 25), et
la fixation avec l'élément de fixation du boîtier (S2 ; S3) comprend verrouiller la pièce de verrouillage (34b ; 44b) au deuxième récepteur (24 ; 25) avec la pièce de verrouillage (34b ; 44b).
